# EUROPEAN PATENT SPECIFICATION

(11) **EP 1 269 848 B1**
(45) Date of publication and mention of the grant of the patent: **21.02.2007**
(21) Application number: 01917651.0
(22) Date of filing: 29.03.2001
(51) Int. Cl.: A01N 61/00, A01N 33/12, D06M 15/61, C08G 73/00

(54) **ANTIBACTERIAL AGENT FOR FIBER AND ANTIBACTERIAL TEXTILE PRODUCT**
ANTIBAKTERIELLE WIRKSTOFF FÜR FASERN UND ANTIBAKTERIELLES TEXTILGUT
AGENT ANTIBACTERIEN DESTINE A DES FIBRES, ET PRODUIT TEXTILE ANTIBACTERIEN

(30) Priority: 31.03.2000 JP 2000096802
(43) Date of publication of application: 02.01.2003
(73) Proprietor: NICCA CHEMICAL CO., LTD., Fukui-shi, Fukui 910-8670 (JP)
(72) Inventor: MIYAMOTO, Kenichi, Fukui-shi, Fukui 910-8670 (JP); KAMEOKA, Hitomi, Fukui-shi, Fukui 910-8670 (JP); MIYAMOTO, Hidekazu, Fukui-shi, Fukui 910-8670 (JP); MAKINO, Masahiro, Fukui-shi, Fukui 910-8670 (JP)
(74) Representative: Gille Hrabal Struck Neidlein Prop Roos
(86) International application number: PCT/JP2001/002693
(87) International publication number: WO 2001/074167

(56) References cited:
- JP-A- 2 306 905
- JP-A- 6 065 003
- JP-A- 8 053 307
- JP-A- 9 228 242

## Description

### TECHNICAL FIELD

The present invention relates to an antimicrobial agent for fibers and an antimicrobial fiber product. More particularly, the present invention relates to an antimicrobial agent for fibers which provides fiber products with the antimicrobial property having fastness to the wash without causing yellowing and an antimicrobial fiber product which is treated with the antimicrobial agent for fibers.

### BACKGROUND ART

Recently, development of fiber products treated for providing the antimicrobial property has been actively conducted. As the fiber product used as linens, a product which can maintain the antimicrobial property under severe conditions of the wash and exhibits a broad antimicrobial spectrum is desired. At present, low molecular weight quaternary ammonium compounds proposed in Japanese Patent Application Laid-Open No. Heisei 3(1991)-38552 and Japanese Patent Application Publication Heisei 1(1989)-33589 and aromatic compounds having chlorine such as trichlorocarbanilides proposed in Japanese Patent Application Laid-Open No. Heisei 1(1989)-266277 are widely used as the antimicrobial agent for providing fiber products with the antimicrobial property. However, the fiber products provided with the antimicrobial property by using the low molecular weight quaternary ammonium compound have a drawback in that the antimicrobial property deteriorates after washes and yellowing takes place. The trichlorocarbanilide has a drawback in that this compound has a narrow antimicrobial spectrum since this compound exhibits a very weak antimicrobial property to Gram-negative bacteria such as Escherichia coli although this compound exhibits the antimicrobial property to Gram-positive bacteria.

On the other hand, fiber products treated with macromolecular compounds such as polyhexamethylene biguanide hydrochloride (Japanese Patent Application Publication Showa 62(1987)-60509), poly(oxyethylene-(dimethyliminio)ethylene(dimethyliminio)ethylene dichloride (Japanese Patent Application Laid-Open No. Heisei 5(1993)-310505) and a condensate of cyanoguanidine and polyethylenepolyamine (Japanese Patent Application Laid-Open No. Heisei 9(1997)-195171) can hardly satisfy the antimicrobial property required for the antimicrobial fiber product used as linens, which is required to exhibit fastness to 50 or more washes at a wash temperature of 60°C or higher although the antimicrobial property can be maintained under the condition of the wash in the ordinary household. Further relevant art is disclosed in JP8(1996)-053307 and JP2 (1990)-306905. Moreover, when fibers are treated with the above macromolecular compounds, problems such as deterioration in whiteness and yellowing of fiber products and formation of rust on fiber processing machines such as pin tenters and dryers take place and these compounds cannot be used for practical applications at present. For improving whiteness of fiber products, in general, an anionic surfactant is used in combination with an antimicrobial agent for fibers. However, since a cationic compound such as poly(oxyethylene(dimethyliminio)-ethylene(dimethyliminio)ethylene dichloride and an anionic surfactant form a complex, problems arise in that stability of the antimicrobial agent for fibers decreases and that the antimicrobial property deteriorates.

Inorganic antimicrobial agents such as silver and titanium have drawbacks in that discoloration of fiber products takes place and that resins used in combination for improving the antimicrobial property during the treatment of fiber products such as glyoxal-based resins and urethane-based resins are degraded with the formed active hydrogen. Therefore, inorganic antimicrobial agents are not suitable for posttreatments such as finishing.

The present invention has an object of providing an antimicrobial agent for fibers which provides fiber products with the antimicrobial property having fastness to the wash without causing yellowing and an antimicrobial fiber product which is treated with the antimicrobial agent for fibers.

### DISCLOSURE OF THE INVENTION

As the result of intensive studies by the present inventors to overcome the above problems, it was found that a cationic polymer having a heteroalkylene group, an alkylene group having 3 or more carbon atoms and a quaternary ammonium salt structure in the main chain exhibited excellent antimicrobial property, an antimicrobial agent comprising this cationic polymer could provide fiber products with an excellent antimicrobial property without causing discoloration such as yellowing and the antimicrobial property could be maintained under severe wash conditions. The present invention has been made based on this knowledge.
The present invention provides:
(1) An antimicrobial agent for fibers which comprises a cationic polymer having a repeating unit represented by general formula [1]: 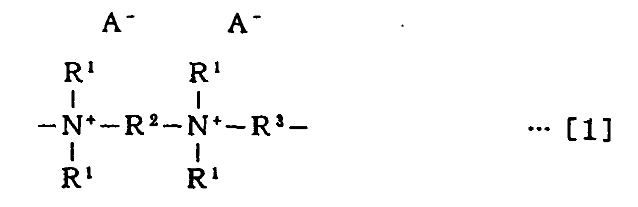 wherein a plurality of R¹ each independently represent an alkyl group having 1 to 4 carbon atoms, a hydroxyalkyl group having 1 to 4 carbon atoms or an alkenyl group having 2 to 4 carbon atoms, R² represents an alkylene group having 3 to 10 carbon atoms, R³ represents a heteroalkylene group having 2 to 6 carbon atoms and A⁻ represents an anion;
(2) An antimicrobial agent for fibers described in (1), wherein the cationic polymer has a weight-average molecular weight of 6,000 to 80,000;
(3) An antimicrobial agent for fibers described in (1), which comprises the cationic polymer and an anionic surfactant;
(4) An antimicrobial agent for fibers described in (3), which comprises the cationic polymer, the anion surfactant and a nonionic surfactant; and
(5) An antimicrobial fiber product which is treated with an antimicrobial agent described in any one of (1) to (4).

### THE MOST PREFERRED EMBODIMENT TO CARRY OUT THE INVENTION

The antimicrobial agent for fibers of the present invention comprises a cationic polymer having a repeating unit represented by general formula [1]:

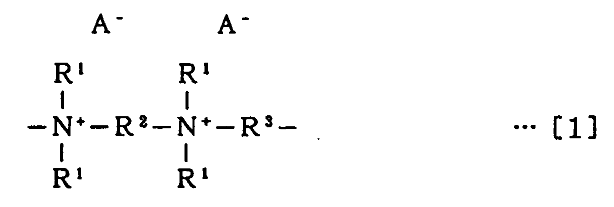

In general formula [1], the plurality of R¹ each independently represent an alkyl group having 1 to 4 carbon atoms, a hydroxyalkyl group having 1 to 4 carbon atoms or an alkenyl group having 2 to 4 carbon atoms, four groups represented by R¹ may represent the same group or different groups, R² represents an alkylene group having 3 to 10 carbon atoms, R³ represents a heteroalkylene group having 2 to 6 carbon atoms and A⁻ represents an anion.

Examples of the alkyl group having 1 to 4 carbon atoms include methyl group, ethyl group, n-propyl group, isopropyl group and n-butyl group. Examples of the hydroxyalkyl group having 1 to 4 carbon atoms include hydroxymethyl group, hydroxyethyl group, hydroxypropyl group, 1-methyl-1-hydroxyethyl group and 1-methyl-2-hydroxyethyl group. Examples of the alkenyl group having 2 to 4 carbon atoms include vinyl group and allyl group. It is preferable that R¹ represents methyl group.

The alkylene group having 3 to 10 carbon atoms represented by R² is not particularly limited and any of linear alkylene groups and branched alkylene groups can be used. Examples of the alkylene group include propylene group, trimethylene group, butylene group, hexamethylene group, 2-ethylhexamethylene group, octamethylene group and decamethylene group.

The heteroalkylene group having 2 to 6 carbon atoms which is represented by R³ is not particularly limited. It is preferable that the hetero atom is oxygen or sulfur. Examples of the heteroalkylene group include methyleneoxymethylene group, methyleneoxyethylene group, ethyleneoxyethylene group, ethyleneoxymethyleneoxyethylene group, methylenethiomethylene group, methylenethioethylene group and ethylenethioethylene group.

The anion represented by A- is not particularly limited as long as the anion forms a quaternary ammonium compound. Examples of the anion represented by A⁻ include anions derived from monobasic or polybasic carboxylic acids such as formic acid, acetic acid, propionic acid, gluconic acid, lactic acid, fumaric acid, maleic acid and adipic acid; anions of esters of phosphoric acid; anions of esters of alkylsulfuric acids; halogen anions; sulfate anion; nitrate anion; and phosphate anion. Among the above anions, chlorine anion and bromine anion are preferable.

In the present invention, it is preferable that the weight-average molecular weight of the cationic polymer having a repeating unit represented by general formula [1] is in the range of 6,000 to 80,000 and more preferably in the range of 8,000 to 50,000. When the weight-average molecular weight is smaller than 6,000, the antimicrobial property of the cationic polymer is relatively weak and it is necessary that the treatment is conducted in a high concentration of the cationic polymer to obtain fiber products exhibiting a sufficient antimicrobial effect. Therefore, such a molecular weight is not preferable from the standpoint of economy. When the weight-average molecular weight exceeds 80,000, viscosity of the cationic polymer increases and there is the possibility that workability deteriorates. In the present invention, the weight-average molecular weight of the cationic polymer having the repeating unit represented by general formula [1] can be measured in accordance with the gel permeation chromatography using polyethylene glycol having a known molecular weight as the reference.

Examples of the cationic polymer having a repeating unit represented by general formula [1] which is used in the present invention include poly[oxyethylene(dimethyliminio)trimethylene(dimethyliminio)-ethylene dihalides], poly[oxyethylene(dimethyliminio)hexamethylene-(dimethyliminio)ethylene dihalides], poly[oxymethyleneoxyethylene-(dimethyliminio)trimethylene(dimethyliminio)ethylene dihalides] and poly[oxymethyleneoxyethylene(dimethyliminio)hexamethylene(dimethyli minio)ethylene dihalides].

The process for producing the cationic polymer having a repeating unit represented by general formula [1] is not particularly limited. For example, the cationic polymer can be produced by the reaction of an N,N,N',N-tetraalkylenediamine represented by general formula [2] and a dichloroheteroalkylene compound represented by general formula [3]:

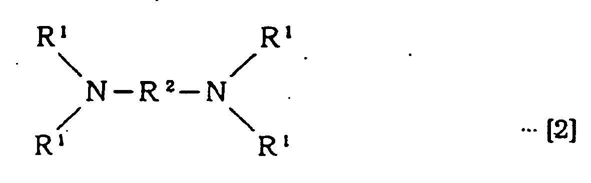

Cl-R³-Cl [3]

In general formula [2], the plurality of R¹ each independently represents an alkyl group having 1 to 4 carbon atoms, a hydroxyalkyl group having 1 to 4 carbon atoms or an alkenyl group having 2 to 4 carbon atoms, four R¹ may represent the same group or different groups and R² represents an alkylene group having 3 to 10 carbon atoms. In general formula [3], R³ represents a heteroalkylene group having 2 to 6 carbon atoms.

Examples of the compound represented by general formula [2] include N,N,N',N'-tetramethyl-1,3-propanediamine, N,N,N',N'-tetramethyl-1,4-butanediamine, N,N,N',N'-tetramethyl-1,3-butanediamine, N,N,N',N'-2-pentamethyl-1,2-propanediamine and N,N,N',N'-tetramethyl-hexamethylenediamine. The above compounds may be used singly or in combination of two or more. Examples of the compound represented by general formula [3] include di(chloromethyl) ether, bis(2-chloroethyl) ether, di(chloromethyl) formal, bis(2-chloroethyl) formal, 1,2-bis(chloromethoxy)-ethane and bis(2-chloroethyl) sulfide. The compounds represented by general formulae [2] and [3] may be used singly or in combination of two or more.

It is preferable that the antimicrobial agent for fibers of the present invention comprises an anionic surfactant in combination with the cationic polymer having a repeating unit represented by general formula [1]. It is more preferable that the antimicrobial agent comprises an anionic surfactant and a nonionic surfactant in combination with the cationic polymer.

The anionic surfactant comprised in the antimicrobial agent for fibers of the present invention is not particularly limited. Examples of the anionic surfactant include salts of carboxymethylated compounds, salts of sulfonated compounds, salts of esters of sulfuric acid and salts of esters of phosphoric acid which are derived from nonionic surfactants such as addition products of alkylene oxides to higher alcohols, addition products of alkylene oxides to phenol modified with styrene and addition products of alkylene oxides to higher alkylamines. Examples of the counter ion include sodium ion, potassium ion and ammonium ion. The anionic surfactant may be used singly or in combination of two or more. It is preferable that the anionic surfactant is used in an amount in the range of 10 to 300 parts by weight and more preferably in the range of 50 to 200 parts by weight per 100 parts by weight of the cationic polymer having the repeating unit represented by general formula [1]. By adding the anionic surfactant to the antimicrobial agent for fibers, compatibility of fluorescent whitening agents with the cationic polymer having the repeating unit represented by general formula [1] can be improved.

The nonionic surfactant comprised in the antimicrobial agent for fibers of the present invention is not particularly limited. Examples of the nonionic surfactant include addition products of alkylene oxides to higher alcohols, addition products of alkylene oxides to alkylphenols, addition products of alkylene oxides to phenol modified with styrene and addition products of alkylene oxides to higher alkylamines, addition products of alkylene oxides to fatty acids and addition products of alkylene oxides to esters of sorbitan fatty acid esters. The nonionic surfactant may be used singly or in combination of two or more. It is preferable that the nonionic surfactant is used in an amount in the range of 10 to 300 parts by weight and more preferably in the range of 50 to 200 parts by weight per 100 parts by weight of the cationic polymer having the repeating unit represented by general formula [1]. By adding the nonionic surfactant to the antimicrobial agent for fibers, compatibility of the cationic polymer having the repeating unit represented by general formula [1] with the anionic surfactant can be improved.

By using the antimicrobial agent for fibers of the present invention, yellowing of fiber products can be prevented, restriction on the effect of the fluorescent whitening agent can be eliminated, the fluorescent whiteness and the whiteness of fiber products can be maintained and, thus, the antimicrobial fiber product of the present invention which exhibits the excellent antimicrobial effect can be obtained. The antimicrobial fiber product of the present invention exhibits excellent fastness to the wash and the antimicrobial property can be maintained after the wash under severe conditions.

The material of the fiber product treated with the antimicrobial agent for fibers of the present invention is not particularly limited. Examples of the material include natural fibers such as cotton, silk and wool, regenerated fibers such as rayon, semi-synthetic fibers such as acetate, synthetic fibers such as polyesters and nylon and composite fibers composed of two or more types of the above fibers. The structure of the fiber product is not particularly limited. Examples of the structure of the fiber product include yarns, woven fabrics, knit fabrics, non-woven fabrics and braided fabrics.

The process for treating the fiber products with the antimicrobial agent for fibers of the present invention is not particularly limited. Examples of the process include the padding process, the dipping process, the spraying process and the coating process. The stage in which the fiber product is treated is not particularly limited. It is preferable that the treatment is conducted after spinning and processing of spun yarns. The antimicrobial fiber product of the present invention can be obtained by attaching the antimicrobial agent for fibers of the present invention to a fiber product in a suitable amount in accordance with the required antimicrobial property and fastness to the wash. When a high degree of fastness to the wash is required, for example, when it is required that the antimicrobial property be maintained after the wash under the wash condition decided by the Japanese Association for the Functional Evaluation of Textiles such as 50 washes at the wash temperature of 80°C, or when a fiber material which cannot easily be provided with the fastness to the wash is used, a synthetic resin or a crosslinking agent may be used in combination so that the adsorption of the cationic polymer having the repeating unit represented by general formula [1] into the fiber material is promoted. Examples of the synthetic resin used above include acrylic resins, urethane resins, oxazoline resins and silicone resins. The synthetic resin can be used in a suitable amount in accordance with the required fastness to the wash.

### EXAMPLES

The present invention will be described more specifically with reference to examples in the following. However, the present invention is not limited to the examples.

The weight-average molecular weight of a cationic polymer having a repeating unit represented by general formula [1] was obtained by the measurement using an aqueous gel permeation chromatograph (GPC) [manufactured by TOSO Co., Ltd.; HLC-8120GPC], polyethylene glycol as the reference material and a buffer solution of acetic acid (pH 4.7) as the solvent for elution.

The whiteness and the antimicrobial property of an antimicrobial fiber product were evaluated in accordance with the following methods.

### (1) Evaluation of the whiteness

The Hunter whiteness was measured by a color meter [manufactured by MINOLTA Co., Ltd.; CM-3700d] using a fabric not treated with an antimicrobial agent for fibers and the fabric after the treatment with an antimicrobial agent for fibers and before the wash.

### (2) Evaluation of the antimicrobial property

The antimicrobial property of a fabric treated with an antimicrobial agent for fibers was evaluated using the fabric before the wash, after 10 washes and after 50 washes in accordance with the quantitative method of Japanese Industrial Standard L 1902: 1998. The antimicrobial property of the fabric not treated with the antimicrobial agent for fibers was also evaluated in the same manner. The evaluation after 10 washes was conducted in accordance with the manual for the pretreatment of a product having the SEK mark which is decided by the Japanese Association for the Functional Evaluation of Textiles. The evaluation after 50 washes was conducted in accordance with the method of washing fiber products having an antimicrobial treatment (specific applications) which is decided by the Japanese Association for the Functional Evaluation of Textiles.

As the test microorganism, Staphylococcus aureus ATCC 6538P, Klebsiella pneumoniae ATCC 4352 and Pseudomonase areuginosa IFO 3080 were used. The antimicrobial property was evaluated based on the microbicidal activity in accordance with Japanese Industrial Standard L 1902. The microbicidal activity is a value obtained by subtracting a common logarithmic value of the number of a live microorganism in a fabric treated with an antimicrobial agent after culture for 18 hours from a common logarithmic value of the number of the live microorganism in the fabric not treated with the antimicrobial agent immediately after inoculation. The greater the microbicidal activity, the more excellent the antimicrobial property.

In Examples and Comparative Examples, the following anionic surfactant and nonionic surfactant were used:
Anionic surfactant A: a 20% by weight aqueous solution of a sodium salt of a product obtained by carboxymethylation of an addition product of ethylene oxide (10 moles) to cetyl alcohol.
Anionic surfactant B: a 20% by weight aqueous solution of a sulfuric acid ester of an addition product of ethylene oxide (10 moles) to phenol modified with three styrenes.
Nonionic surfactant C: a 20% by weight aqueous solution of an addition product of ethylene oxide (10 moles) to cetyl alcohol.

### Example 1

Water in an amount of 50 g, 25 g of N,N,N',N'-tetramethyl-1,3-propanediamine and 27 g of bis(2-chloroethyl) ether were mixed together. After the reaction was allowed to proceed in the resultant mixture at 95°C for 10 hours, the concentration of the cationic polymer was adjusted to 20% by weight by adding water to the reaction mixture and an antimicrobial agent for fibers was obtained. This antimicrobial agent for fibers will be referred to as Antimicrobial agent for fibers A. The obtained cationic polymer which was poly[oxyethylene(dimethyliminio)trimethylene-(dimethyliminio)ethylene dichloride had a weight-average molecular weight of 8,000.

### Example 2

Water in an amount of 50 g, 25 g of N,N,N',N'-tetramethyl-1,3-propanediamine and 27 g of bis(2-chloroethyl) ether were mixed together. After the reaction was allowed to proceed in the resultant mixture at 95°C for 20 hours, the concentration of the cationic polymer was adjusted to 20% by weight by adding water to the reaction mixture and an antimicrobial agent for fibers was obtained. This antimicrobial agent for fibers will be referred to as Antimicrobial agent for fibers B. The obtained cationic polymer which was poly[oxyethylene(dimethyliminio)trimethylene-(dimethyliminio)ethylene dichloride had a weight-average molecular weight of 12,000.

### Example 3

Water in an amount of 50 g, 25 g of N,N,N',N'-tetramethyl-1,3-propanediamine and 27 g of bis(2-chloroethyl) ether were mixed together. After the reaction was allowed to proceed in the resultant mixture at 95°C for 25 hours, the concentration of the cationic polymer was adjusted to 20% by weight by adding water to the reaction mixture and an antimicrobial agent for fibers was obtained. This antimicrobial agent for fibers will be referred to as Antimicrobial agent for fibers C. The obtained cationic polymer which was poly[oxyethylene(dimethyliminio)trimethylene-(dimethyliminio)ethylene dichloride had a weight-average molecular weight of 30,000.

### Example 4

Water in an amount of 50 g, 25 g of N,N,N',N'-tetramethyl-1,3-propanediamine and 27 g of bis(2-chloroethyl) ether were mixed together. After the reaction was allowed to proceed in the resultant mixture at 95°C for 30 hours, the concentration of the cationic polymer was adjusted to 20% by weight by adding water to the reaction mixture and an antimicrobial agent for fibers was obtained. This antimicrobial agent for fibers will be referred to as Antimicrobial agent for fibers D. The obtained cationic polymer which was poly[oxyethylene(dimethyliminio)trimethylene-(dimethyliminio)ethylene dichloride had a weight-average molecular weight of 40,000.

### Example 5

Water in an amount of 50 g, 25 g of N,N,N',N'-tetramethyl-hexamethylenediamine and 21 g of bis(2-chloroethyl) ether were mixed together. After the reaction was allowed to proceed in the resultant mixture at 100°C for 35 hours, the concentration of the cationic polymer was adjusted to 20% by weight by adding water to the reaction mixture and an antimicrobial agent for fibers was obtained. This antimicrobial agent for fibers will be referred to as Antimicrobial agent for fibers E. The obtained cationic polymer which was poly[oxyethylene(dimethyliminio)hexamethylene(dimethyliminio)ethylene dichloride had a weight-average molecular weight of 30,000.

### Example 6

Water in an amount of 50 g, 25 g of N,N,N',N'-tetramethyl-1,3-propanediamine and 37.5 g of a 83% by weight solution of bis(2-chloroethyl) formal were mixed together. After the reaction was allowed to proceed in the resultant mixture at 100°C for 56 hours, the concentration of the cationic polymer was adjusted to 20% by weight by adding water to the reaction mixture and an antimicrobial agent for fibers was obtained. This antimicrobial agent for fibers will be referred to as Antimicrobial agent for fibers F. The obtained cationic polymer which was poly[oxymethyleneoxyethylene(dimethyliminio)trimethylene-(dimethyliminio)ethylene dichloride had a weight-average molecular weight of 25,400.

### Example 7

Water in an amount of 50 g, 25 g of N,N,N',N'-tetramethyl-1,3-propanediamine and 27 g of bis(2-chloroethyl) ether were mixed together. After the reaction was allowed to proceed in the resultant mixture at 95°C for 5 hours, the concentration of the cationic polymer was adjusted to 20% by weight by adding water to the reaction mixture and an antimicrobial agent for fibers was obtained. This antimicrobial agent for fibers will be referred to as Antimicrobial agent for fibers G. The obtained cationic polymer which was poly[oxyethylene(dimethyliminio)trimethylene-(dimethyliminio)ethylene dichloride had a weight-average molecular weight of 5,000.

### Comparative Example 1

Water in an amount of 50 g, 25 g of N,N,N',N'-tetramethylethylenediamine and 30 g of bis(2-chloroethyl) ether were mixed together. After the reaction was allowed to proceed in the resultant mixture at 95°C for 20 hours, the concentration of the cationic polymer was adjusted to 20% by weight by adding water to the reaction mixture and an antimicrobial agent for fibers was obtained. This antimicrobial agent for fibers will be referred to as Antimicrobial agent for fibers a. The obtained cationic polymer which was poly[oxyethylene(dimethyliminio)ethylene(dimethyl-iminio)ethylene dichloride had a weight-average molecular weight of 8,000.

### Comparative Example 2

A 20% by weight aqueous solution of benzalkonium chloride was prepared and an antimicrobial agent for fibers was obtained. This antimicrobial agent for fibers will be referred to as Antimicrobial agent for fibers b.

### Comparative Example 3

3,4,4'-Trichlorocarbanilide in an amount of 20 g, 2 g of an addition product of ethylene oxide to a higher alcohol [SOFTANOL 150, manufactured by NIPPON SHOKUBAI Co., Ltd.] and 78 g of water were mixed together and the resultant mixture was dispersed by a sand blinder [manufactured by IGARASHI KIKAI SEIZO Co., Ltd.] to obtain a dispersion of fine particles. Thus, a 20% by weight dispersion of trichlorocarbane was prepared and an antimicrobial agent for fibers was obtained. This antimicrobial agent for fibers will be referred to as Antimicrobial agent for fibers c.

### Comparative Example 4

A 20% by weight aqueous solution of polyhexamethylene biguanide hydrochloride [PROXEL IB, manufactured by AVESIA Co., Ltd.] was used as an antimicrobial agent for fibers. This antimicrobial agent for fibers will be referred to as Antimicrobial agent for fibers d.

### Example 8

Using a treatment bath containing 0.25% by weight of Antimicrobial agent for fibers A obtained in Example 1, a cotton broadcloth was subjected to the padding treatment under the condition of 1 dip-1 nip and a pickup of 60% by weight, dried at 120°C for 2 minutes and subjected to the heat treatment at 150°C for 2 minutes and an antimicrobial cotton broadcloth was obtained. The antimicrobial property and the whiteness of the obtained antimicrobial broadcloth were evaluated.

The results of the evaluations were as follows: the microbicidal activity to Staphylococcus aureus was greater than 2.9 before the wash, after 10 washes and after 50 washes; the microbicidal activity to Klebsiella pneumoniae was greater than 3.0 before the wash, 1.5 after 10 washes and -0.7 after 50 washes; and the microbicidal activity to Pseudomonase areuginosa was greater than 3.1 before the wash, -0.9 after 10 washes and -2.5 after 50 washes. The Hunter whiteness was 76.

### Examples 9 and 10

Cotton broadcloths were treated and evaluated in accordance with the same procedures as those conducted in Example 8 except that a treatment bath containing 1.25% by weight or 2.5% by weight of Antimicrobial agent for fibers A obtained in Example 1 was used.

### Examples 11 to 13

Cotton broadcloths were treated and evaluated in accordance with the same procedures as those conducted in Examples 8 to 10 except that Antimicrobial agent for fibers B obtained in Example 2 was used in place of Antimicrobial agent for fibers A obtained in Example 1.

### Examples 14 to 16

Cotton broadcloths were treated and evaluated in accordance with the same procedures as those conducted in Examples 8 to 10 except that Antimicrobial agent for fibers C obtained in Example 3 was used in place of Antimicrobial agent for fibers A obtained in Example 1.

### Examples 17 to 19

Cotton broadcloths were treated and evaluated in accordance with the same procedures as those conducted in Examples 8 to 10 except that Antimicrobial agent for fibers D obtained in Example 4 was used in place of Antimicrobial agent for fibers A obtained in Example 1.

### Example 20

A cotton broadcloth was treated and evaluated in accordance with the same procedures as those conducted in Example 8 except that a treatment bath containing 2.5% by weight of Antimicrobial agent for fibers D obtained in Example 4 and 2.5% by weight of Anionic surfactant A was used.

### Example 21

A cotton broadcloth was treated and evaluated in accordance with the same procedures as those conducted in Example 8 except that a treatment bath containing 2.5% by weight of Antimicrobial agent for fibers D obtained in Example 4, 2.5% by weight of Anionic surfactant A and 2.5% by weight of Nonionic surfactant C was used.

### Example 22

A cotton broadcloth was treated and evaluated in accordance with the same procedures as those conducted in Example 21 except that Anionic surfactant B was used in place of Anionic surfactant A.

### Examples 23 to 28

Cotton broadcloths were treated and evaluated in accordance with the same procedures as those conducted in Examples 17 to 22 except that Antimicrobial agent for fibers E obtained in Example 5 was used in place of Antimicrobial agent for fibers D obtained in Example 4.

### Examples 29 to 33

Cotton broadcloths were treated and evaluated in accordance with the same procedures as those conducted in Examples 17 to 22 except that Antimicrobial agent for fibers F obtained in Example 6 was used in place of Antimicrobial agent for fibers D obtained in Example 4.

### Example 34

A cotton broadcloth was treated and evaluated in accordance with the same procedures as those conducted in Example 10 except that Antimicrobial agent for fibers G obtained in Example 7 was used in place of Antimicrobial agent for fibers A obtained in Example 1.

### Example 35

A cotton broadcloth was treated and evaluated in accordance with the same procedures as those conducted in Example 34 except that a treatment bath containing 5.0% by weight of Antimicrobial agent for fibers G was prepared.

### Comparative Example 5

A cotton broadcloth was treated and evaluated in accordance with the same procedures as those conducted in Example 8 except that Antimicrobial agent for fibers a obtained in Comparative Example 1 was used in place of Antimicrobial agent for fibers A obtained in Example 1.

The results of the evaluations were as follows: the microbicidal activity to Staphylococcus aureus was 2.3 before the wash, 2.0 after 10 washes and -1.2 after 50 washes; the microbicidal activity to Klebsiella pneumoniae was 1.9 before the wash, -0.5 after 10 washes and smaller than -2.9 after 50 washes; and the microbicidal activity to Pseudomonase areuginosa was 0.7 before the wash and smaller than -3.0 after 10 washes and after 50 washes. The Hunter whiteness was 74.

### Comparative Example 6

A cotton broadcloth was treated and evaluated in accordance with the same procedures as those conducted in Comparative Example 5 except that a treatment bath containing 1.25% by weight of Antimicrobial agent for fibers a obtained in Comparative Example 1 was used.

### Comparative Example 7

A cotton broadcloth was treated and evaluated in accordance with the same procedures as those conducted in Example 8 except that a treatment bath containing 2.5% by weight of Antimicrobial agent for fibers a obtained in Comparative Example 1 was used.

### Comparative Examples 8 to 10

Cotton broadcloths were treated and evaluated in accordance with the same procedures as those conducted in Comparative Example 7 except that Antimicrobial agent for fibers b, c or d obtained in Comparative Examples 2 to 4 was used in place of Antimicrobial agent for fibers a obtained in Comparative Example 1.

### Comparative Example 11

A cotton broadcloth was treated and evaluated in accordance with the same procedures as those conducted in Comparative Example 5 except that a treatment bath containing 2.5% by weight of Antimicrobial agent for fibers a obtained in Comparative Example 1 and 2.5% by weight of Anionic surfactant A was used.

### Comparative Example 12

A cotton broadcloth was treated and evaluated in accordance with the same procedures as those conducted in Comparative Example 5 except that a treatment bath containing 2.5% by weight of Antimicrobial agent for fibers a obtained in Comparative Example 1, 2.5% by weight of Anionic surfactant A and 2.5% by weight of Nonionic surfactant C was used.

### Comparative Example 13

The antimicrobial property and the whiteness of a cotton broadcloth without the antimicrobial treatment were evaluated.

The compositions of the treatment baths and the results of the evaluations in Examples 8 to 35 and Comparative Examples 5 to 13 are shown in Table 1.

**Table 1 - 1**

| Example | 8 | 9 | 10 | 11 | 12 | 13 | 14 | 15 | 16 |
|---|---|---|---|---|---|---|---|---|---|
| Composition of treatment bath (% by weight) | | | | | | | | | |
| antimicrobial agent | A | A | A | B | B | B | C | C | C |
| for fibers | 0.25 | 1.25 | 2.5 | 0.25 | 1.25 | 2.5 | 0.25 | 1.25 | 2.5 |
| anionic surfactant A | - | - | - | - | - | - | - | - | - |
| anionic surfactant B | - | - | - | - | - | - | - | - | - |
| nonionic surfactant C | - | - | - | - | - | - | - | - | - |

| Staphylococcus aureus | | | | | | | | | |
|---|---|---|---|---|---|---|---|---|---|
| before wash | >2.9 | >2.9 | >2.9 | >2.9 | >2.9 | >2.9 | >2.9 | >2.9 | >2.9 |
| 10 washes | >2.9 | >2.9 | >2.9 | >2.9 | >2.9 | >2.9 | >2.9 | >2.9 | >2.9 |
| 50 washes | >2.9 | >2.9 | >2.9 | >2.9 | >2.9 | >2.9 | >2.9 | >2.9 | >2.9 |

| Klebsiella pneumoniae | | | | | | | | | |
|---|---|---|---|---|---|---|---|---|---|
| before wash | >3.0 | >3.0 | >3.0 | >3.0 | >3.0 | >3.0 | >3.0 | >3.0 | >3.0 |
| 10 washes | 1.5 | 2.5 | >3.0 | 2.0 | >3.0 | >3.0 | >3.0 | >3.0 | >3.0 |
| 50 washes | -0.7 | -0.2 | 0.5 | 0.4 | 1.1 | >3.0 | 1.3 | 2.7 | >3.0 |

| Pseudomonase areuginosa | | | | | | | | | |
|---|---|---|---|---|---|---|---|---|---|
| before wash | >3.1 | >3.1 | >3.1 | >3.1 | >3.1 | >3.1 | >3.1 | >3.1 | >3.1 |
| 10 washes | -0.9 | 0.3 | 1.4 | 0.2 | 0.8 | 1.6 | 0.5 | 1.2 | 2.0 |
| 50 washes | -2.5 | -1.1 | 0.7 | -1.9 | 0.3 | 0.7 | -1.8 | 0.8 | 1.2 |
| Hunter whiteness | 76 | 75 | 76 | 76 | 76 | 76 | 76 | 76 | 76 |

**Table 1 - 2**

| Example | 17 | 18 | 19 | 20 | 21 | 22 | 23 | 24 | 25 |
|---|---|---|---|---|---|---|---|---|---|
| Composition of treatment bath (% by weight) | | | | | | | | | |
| antimicrobial agent | D | D | D | D | D | D | E | E | E |
| for fibers | 0.25 | 1.25 | 2.5 | 2.5 | 2.5 | 2.5 | 0.25 | 1.25 | 2.5 |
| anionic surfactant A | - | - | - | 2.5 | 2.5 | - | - | - | - |
| anionic surfactant B | - | - | - | - | - | 2.5 | - | - | - |
| nonionic surfactant C | - | - | - | - | 2.5 | 2.5 | - | - | - |

| Staphylococcus aureus | | | | | | | | | |
|---|---|---|---|---|---|---|---|---|---|
| before wash | >2.9 | >2.9 | >2.9 | >2.9 | >2.9 | >2.9 | >2.9 | >2.9 | >2.9 |
| 10 washes | >2.9 | >2.9 | >2.9 | >2.9 | >2.9 | >2.9 | >2.9 | >2.9 | >2.9 |
| 50 washes | >2.9 | >2.9 | >2.9 | >2.9 | >2.9 | >2.9 | >2.9 | >2.9 | >2.9 |

| Klebsiella pneumoniae | | | | | | | | | |
|---|---|---|---|---|---|---|---|---|---|
| before wash | >3.0 | >3.0 | >3.0 | >3.0 | >3.0 | >3.0 | >3.0 | >3.0 | >3.0 |
| 10 washes | >3.0 | >3.0 | >3.0 | >3.0 | >3.0 | >3.0 | >3.0 | >3.0 | >3.0 |
| 50 washes | 2.1 | >3.0 | >3.0 | >3.0 | >3.0 | >3.0 | >3.0 | >3.0 | >3.0 |

| Pseudomonase areuginosa | | | | | | | | | |
|---|---|---|---|---|---|---|---|---|---|
| before wash | >3.1 | >3.1 | >3.1 | >3.1 | >3.1 | >3.1 | >3.1 | >3.1 | >3.1 |
| 10 washes | 1.0 | 1.9 | 2.4 | >3.1 | >3.1 | >3.1 | >3.1 | >3.1 | >3.1 |
| 50 washes | -1.0 | 0.5 | 1.7 | 2.2 | >3.1 | >3.1 | -1.2 | 0.5 | 0.8 |
| Hunter whiteness | 76 | 75 | 76 | 78 | 79 | 79 | 76 | 76 | 76 |

**Table 1- 3**

| Example | 26 | 27 | 28 | 29 | 30 | 31 | 32 | 33 |
|---|---|---|---|---|---|---|---|---|
| Composition of treatment bath (% by weight) | | | | | | | | |
| antimicrobial agent | E | E | E | F | F | F | F | F |
| for fibers | 2.5 | 2.5 | 2.5 | 0.25 | 1.25 | 2.5 | 2.5 | 2.5 |
| anionic surfactant A | 2.5 | 2.5 | - | - | - | - | 2.5 | - |
| anionic surfactant B | - | - | 2.5 | - | - | - | - | 2.5 |
| nonionic surfactant C | - | 2.5 | 2.5 | - | - | - | 2.5 | 2.5 |

| Staphylococcus aureus | | | | | | | | |
|---|---|---|---|---|---|---|---|---|
| before wash | >2.9 | >2.9 | >2.9 | >2.9 | >2.9 | >2.9 | >2.9 | >2.9 |
| 10 washes | >2.9 | >2.9 | >2.9 | >2.9 | >2.9 | >2.9 | >2.9 | >2.9 |
| 50 washes | >2.9 | >2.9 | >2.9 | >2.9 | >2.9 | >2.9 | >2.9 | >2.9 |

| Klebsiella pneumoniae | | | | | | | | |
|---|---|---|---|---|---|---|---|---|
| before wash | >3.0 | >3.0 | >3.0 | >3.0 | >3.0 | >3.0 | >3.0 | >3.0 |
| 10 washes | >3.0 | >3.0 | >3.0 | 2.9 | >3.0 | >3.0 | >3.0 | >3.0 |
| 50 washes | >3.0 | >3.0 | >3.0 | 1.1 | 1.7 | 2.0 | >3.0 | >3.0 |

| Pseudomonase areuginosa | | | | | | | | |
|---|---|---|---|---|---|---|---|---|
| before wash | >3.1 | >3.1 | >3.1 | >3.1 | >3.1 | >3.1 | >3.1 | >3.1 |
| 10 washes | >3.1 | >3.1 | >3.1 | 0.2 | 1.0 | 1.9 | 2.0 | 2.1 |
| 50 washes | 2.9 | >3.1 | >3.1 | <-3.0 | <-3.0 | 1.1 | 1.5 | 1.5 |
| Hunter whiteness | 78 | 79 | 79 | 77 | 77 | 77 | 79 | 79 |

**Table 1 - 4**

| Example | 34 | 35 |
|---|---|---|
| Composition of treatment bath (% by weight) | | |
| antimicrobial agent | G | G |
| for fibers | 2.5 | 5.0 |
| anionic surfactant A | - | - |
| anionic surfactant B | - | - |
| nonionic surfactant C | - | 2.5 |

| Staphylococcus aureus | | |
|---|---|---|
| before wash | >2.9 | >2.9 |
| 10 washes | >2.9 | >2.9 |
| 50 washes | 2.5 | 2.7 |

| Klebsiella pneumoniae | | |
|---|---|---|
| before wash | >3.0 | >3.0 |
| 10 washes | 0.4 | 2.7 |
| 50 washes | -2.0 | 0.5 |

| Pseudomonase areuginosa | | |
|---|---|---|
| before wash | >3.1 | >3.1 |
| 10 washes | 0.1 | 1.4 |
| 50 washes | <-3.0 | 0.3 |
| Hunter whiteness | 76 | 76 |

**Table 1 - 5**

| Comparative Example | 5 | 6 | 7 | 8 | 9 | 10 | 11 | 12 | 13 |
|---|---|---|---|---|---|---|---|---|---|
| Composition of treatment bath (% by weight) | | | | | | | | | |
| antimicrobial agent | a | a | a | b | c | d | a | a | - |
| for fibers | 0.25 | 1.25 | 2.5 | 2.5 | 2.5 | 2.5 | 2.5 | 2.5 | - |
| anionic surfactant A | - | - | - | - | - | - | 2.5 | 2.5 | - |
| anionic surfactant B | - | - | - | - | - | - | - | - | - |
| nonionic surfactant C | - | - | - | - | - | - | - | 2.5 | - |

| Staphylococcus aureus | | | | | | | | | |
|---|---|---|---|---|---|---|---|---|---|
| before wash | 2.3 | >2.9 | >2.9 | >2.9 | >2.9 | >2.9 | >2.9 | >2.9 | <-3.0 |
| 10 washes | 2.0 | 2.7 | >2.9 | 1.8 | <-3.0 | >2.9 | >2.9 | >2.9 | <-3.0 |
| 50 washes | -1.2 | -0.2 | 1.2 | <-3.0 | <-3.0 | >2.9 | 1.1 | 1.2 | <-3.0 |

| Klebsiella pneumoniae | | | | | | | | | |
|---|---|---|---|---|---|---|---|---|---|
| before wash | 1.9 | 2.2 | 2.9 | >3.0 | 0.3 | >3.0 | 2.3 | 2.1 | <-3.0 |
| 10 washes | -0.5 | 0.6 | 2.1 | <-3.1 | <-3.1 | 2.5 | 1.0 | 1.3 | <-3.0 |
| 50 washes | <-2.9 | -2.8 | 0.8 | <-3.1 | <-3.1 | 1.1 | 0.2 | 0.8 | <-3.0 |

| Pseudomonase areuginosa | | | | | | | | | |
|---|---|---|---|---|---|---|---|---|---|
| before wash | 0.7 | 0.9 | 1.8 | >3.1 | <-3.0 | >3.1 | 1.5 | 1.5 | <-3.0 |
| 10 washes | <-3.0 | -2.8 | 0.3 | <-3.0 | <-3.0 | 0.1 | -1.1 | 0.1 | <-3.0 |
| 50 washes | <-3.0 | <-3.0 | <-3.0 | <-3.0 | <-3.0 | <-3.0 | <-3.0 | <-3.0 | <-3.0 |
| Hunter whiteness | 74 | 72 | 72 | 70 | 78 | 73 | 73 | 73 | 79 |

When the results of Examples 10, 13, 16, 19, 25, 31 and 34 and Comparative Examples 7 to 10 in which the treatment bath contained the antimicrobial agent for fibers alone and the content of the antimicrobial agents for fibers was 2.5% by weight were compared, the antimicrobial cotton broadcloths obtained in Examples showed more excellent antimicrobial properties after the washes. When the antimicrobial agent containing the cationic polymer having a lower weight-average molecular weight was used, the excellent antimicrobial property could be obtained by conducting the treatment in a higher concentration. The antimicrobial cotton broadcloths obtained in Examples 20 to 22, 26 to 28, 32 and 33 in which the surfactants were used in combination showed the same whiteness as that of the broadcloth without the antimicrobial treatment shown in Comparative Example 13 and it was shown that the decrease in the whiteness could be prevented by the combined use of the surfactants. In contrast, the results in Comparative Examples 11 and 12 in which the conventional antimicrobial agent was used showed the decrease in the whiteness even when the surfactant was used in combination.

### Example 36

Using a treatment bath containing 0.25% by weight of Antimicrobial agent D obtained in Example 4, a cotton knit fabric treated by fluorescent whitening was treated by dipping under the conditions of a bath ratio of 1:20, a temperature of 40°C, a time of 20 minutes and a pickup of 100% by weight, dried at 120°C for 2 minutes and treated by heating at 150°C for 2 minutes and an antimicrobial cotton knit fabric was obtained. The antimicrobial property and the whiteness of the obtained antimicrobial cotton knit fabric were evaluated.

The results of the evaluations were as follows: the microbicidal activity to Staphylococcus aureus was greater than 2.9 before the wash and after 10 washes and 1.0 after 50 washes; the microbicidal activity to Klebsiella pneumoniae was greater than 3.0 before the wash, 1.0 after 10 washes and 0.1 after 50 washes; and the microbicidal activity to Pseudomonase areuginosa was greater than 3.1 before the wash, 0.8 after 10 washes and -1.6 after 50 washes. The Hunter whiteness was 121.

### Examples 37 and 38

Cotton knit fabrics treated by fluorescent whitening were treated and evaluated in accordance with the same procedures as those conducted in Example 36 except that a treatment bath containing 1.25% by weight or 2.5% by weight of Antimicrobial agent for fibers D obtained in Example 4 was used.

### Examples 39 to 41

Cotton knit fabrics treated by fluorescent whitening were treated and evaluated in accordance with the same procedures as those conducted in Examples 36 to 38 except that Antimicrobial agent for fibers E obtained in Example 5 was used in place of Antimicrobial agent for fibers D obtained in Example 4.

### Example 42

A cotton knit fabric treated by fluorescent whitening was treated and evaluated in accordance with the same procedures as those conducted in Example 36 except that a treatment bath containing 2.5% by weight of Antimicrobial agent for fibers D obtained in Example 4 and 2.5% by weight of Anionic surfactant A was used.

### Example 43

A cotton knit fabric treated by fluorescent whitening was treated and evaluated in accordance with the same procedures as those conducted in Example 36 except that a treatment bath containing 2.5% by weight of Antimicrobial agent for fibers D obtained in Example 4, 2.5% by weight of Anionic surfactant A and 2.5% by weight of Nonionic surfactant C was used.

### Example 44

A cotton knit fabric treated by fluorescent whitening was treated and evaluated in accordance with the same procedures as those conducted in Example 36 except that a treatment bath containing 2.5% by weight of Antimicrobial agent for fibers D obtained in Example 4, 2.5% by weight of Anionic surfactant B and 2.5% by weight of Nonionic surfactant C was used.

### Examples 45 to 47

Cotton knit fabrics treated by fluorescent whitening were treated and evaluated in accordance with the same procedures as those conducted in Examples 42 to 44 except that Antimicrobial agent for fibers E obtained in Example 5 was used in place of Antimicrobial agent for fibers D obtained in Example 4.

### Example 48

A cotton knit fabric treated by fluorescent whitening was treated and evaluated in accordance with the same procedures as those conducted in Example 36 except that a treatment bath containing 5.0% by weight of Antimicrobial agent for fibers G obtained in Example 7 in place of Antimicrobial agent for fibers D obtained in Example 4 was used.

### Comparative Example 14

A cotton knit fabrics treated by fluorescent whitening were treated and evaluated in accordance with the same procedures as those conducted in Example 38 except that Antimicrobial agent for fibers a obtained in Comparative Example 1 was used in place of Antimicrobial agent for fibers D obtained in Example 4.

The results of the evaluations were as follows: the microbicidal activity to Staphylococcus aureus was 2.9 before the wash, 2.5 after 10 washes and 0.9 after 50 washes; the microbicidal activity to Klebsiella pneumoniae was 1.9 before the wash, -0.3 after 10 washes and smaller than -2.9 after 50 washes; and the microbicidal activity to Pseudomonase areuginosa was 0.5 before the wash and smaller than -3.0 after 10 washes and after 50 washes. The Hunter whiteness was 119.

### Comparative Examples 15 to 17

Cotton knit fabrics treated by fluorescent whitening were treated and evaluated in accordance with the same procedures as those conducted in Comparative Example 14 except that Antimicrobial agent for fibers b, c or d obtained in Comparative Examples 2 to 4 was used in place of Antimicrobial agent for fibers a obtained in Comparative Example 1.

### Comparative Example 18

The antimicrobial property and the whiteness of a cotton knit fabrics treated by fluorescent whitening without the antimicrobial treatment were evaluated.

The compositions of the treatment baths and the results of the evaluations in Examples 36 to 48 and Comparative Examples 14 to 18 are shown in Table 2.

**Table 2 - 1**

| Example | 36 | 37 | 38 | 39 | 40 | 41 | 42 | 43 | 44 |
|---|---|---|---|---|---|---|---|---|---|
| Composition of treatment bath (% by weight) | | | | | | | | | |
| antimicrobial agent | D | D | D | E | E | E | D | D | D |
| for fibers | 0.25 | 1.25 | 2.5 | 0.25 | 1.25 | 2.5 | 2.5 | 2.5 | 2.5 |
| anionic surfactant A | - | - | - | - | - | - | 2:5 | 2.5 | - |
| anionic surfactant B | - | - | - | - | - | - | - | - | 2.5 |
| nonionic surfactant C | - | - | - | - | - | - | - | 2.5 | 2.5 |

| Staphylococcus aureus | | | | | | | | | |
|---|---|---|---|---|---|---|---|---|---|
| before wash | >2.9 | >2.9 | >2.9 | >2.9 | >2.9 | >2.9 | >2.9 | >2.9 | >2.9 |
| 10 washes | >2.9 | >2.9 | >2.9 | >2.9 | >2.9 | >2.9 | >2.9 | >2.9 | >2.9 |
| 50 washes | 1.0 | >2.9 | >2.9 | 0.9 | 2.5 | >2.9 | >2.9 | >2.9 | >2.9 |

| Klebsiella pneumoniae | | | | | | | | | |
|---|---|---|---|---|---|---|---|---|---|
| before wash | >3.0 | >3.0 | >3.0 | >3.0 | >3.0 | >3.0 | >3.0 | >3.0 | >3.0 |
| 10 washes | 1.0 | >3.0 | >3.0 | 0.7 | >3.0 | >3.0 | >3.0 | >3.0 | >3.0 |
| 50 washes | 0.1 | 1.9 | >3.0 | 0.1 | 1.9 | 2.8 | >3.0 | >3.0 | >3.0 |

| Pseudomonase areuginosa | | | | | | | | | |
|---|---|---|---|---|---|---|---|---|---|
| before wash | >3.1 | >3.1 | >3.1 | >3.1 | >3.1 | >3.1 | >3.1 | >3.1 | >3.1 |
| 10 washes | 0.8 | 1.0 | 1.4 | 0.4 | 0.5 | 1.2 | 2.2 | 2.4 | 2.5 |
| 50 washes | -1.6 | 0.3 | 1.1 | -2.0 | 0.2 | 0.4 | 1.9 | 1.9 | 2.0 |
| Hunter whiteness | 121 | 120 | 120 | 120 | 120 | 120 | 127 | 138 | 139 |

**Table 2 - 2**

| Example | 45 | 46 | 47 | 48 | | | | | |
|---|---|---|---|---|---|---|---|---|---|
| Comparative Example | | | | | 14 | 15 | 16 | 17 | 18 |
| Composition of treatment bath (% by weight) | | | | | | | | | |
| antimicrobial agent | E | E | E | G | a | b | c | d | - |
| for fibers | 2.5 | 2.5 | 2.5 | 5.0 | 2.5 | 2.5 | 2.5 | 2.5 | - |
| anionic surfactant A | 2.5 | 2.5 | - | - | - | - | - | - | - |
| anionic surfactant B | - | - | 2.5 | - | - | - | - | - | - |
| nonionic surfactant C | - | 2.5 | 2.5 | - | - | - | - | - | - |

| Staphylococcus aureus | | | | | | | | | |
|---|---|---|---|---|---|---|---|---|---|
| before wash | >2.9 | >2.9 | >2.9 | 2.9 | 2.9 | >2.9 | 1.8 | >2.9 | <-3.0 |
| 10 washes | >2.9 | >2.9 | >2.9 | 2.8 | 2.5 | 1.2 | -1.0 | 1.6 | <-3.0 |
| 50 washes | >2.9 | >2.9 | >2.9 | 2.8 | 0.9 | 0.8 | <-3.0 | 0.3 | <-3.0 |

| Klebsiella pneumoniae | | | | | | | | | |
|---|---|---|---|---|---|---|---|---|---|
| before wash | >3.0 | >3.0 | >3.0 | >3.0 | 1.9 | 0.9 | <-2.9 | 1.5 | <-2.9 |
| 10 washes | >3.0 | >3.0 | >3.0 | 2.4 | -0.3 | <-2.9 | <-2.9 | 0.2 | <-2.9 |
| 50 washes | >3.0 | >3.0 | >3.0 | 2.2 | <-2.9 | <-2.9 | <-2.9 | <-2.9 | <-2.9 |

| Pseudomonase areuginosa | | | | | | | | | |
|---|---|---|---|---|---|---|---|---|---|
| before wash | >3.1 | >3.1 | >3.1 | 2.1 | 0.5 | 0.7 | <-3.0 | <-3.0 | <-3.0 |
| 10 washes | 1.8 | 1.8 | 1.7 | 1.7 | <-3.0 | <-3.0 | <-3.0 | <-3.0 | <-3.0 |
| 50 washes | 1.3 | 1.4 | 1.4 | 1.1 | <-3.0 | <-3.0 | <-3.0 | <-3.0 | <-3.0 |
| Hunter whiteness | 128 | 139 | 139 | 120 | 119 | 117 | 135 | 120 | 140 |

When the results of Examples 38 and 41 and Comparative Examples 14 to 17 in which the treatment bath contained the antimicrobial agent for fibers alone and the content of the antimicrobial agents for fibers was 2.5% by weight were compared, the antimicrobial cotton knit fabric obtained in Examples showed more excellent antimicrobial properties after the washes. When the antimicrobial agent containing the cationic polymer having a lower weight-average molecular weight was used, the excellent antimicrobial property could be obtained by conducting the treatment in a higher concentration. The antimicrobial cotton knit fabrics obtained in Examples 42 and 45 in which the anionic surfactant was used in combination showed a greater whiteness and the cotton knit fabrics obtained in Examples 43, 44 and 46 to 47 in which the anionic surfactant and the nonionic surfactant were used in combination showed the same whiteness as that of the cotton knit fabric without the antimicrobial treatment shown in Comparative Example 18. Thus, it was shown that the decrease in the whiteness could be effectively prevented by the combined use of the surfactants.

### Example 49

Using a treatment bath containing 2.5% by weight of Antimicrobial agent D obtained in Example 4, a polyester woven fabric was treated by padding under the condition of 1 dip-1 nip and a pickup of 55% by weight, dried at 120°C for 2 minutes and treated by heating at 180°C for 30 seconds and an antimicrobial polyester woven fabric was obtained. The antimicrobial property and the whiteness of the obtained antimicrobial polyester woven fabric were evaluated.

The results of the evaluations were as follows: the microbicidal activity to Staphylococcus aureus was greater than 2.9 before the wash and after 10 washes and 2.1 after 50 washes; the microbicidal activity to Klebsiella pneumoniae was greater than 3.0 before the wash and after 10 washes and 1.5 after 50 washes; and the microbicidal activity to Pseudomonase areuginosa was greater than 3.1 before the wash, 1.0 after 10 washes and -2.1 after 50 washes.

### Example 50

A polyester woven fabric was treated and evaluated in accordance with the same procedures as those conducted in Example 49 except that Antimicrobial agent for fibers E obtained in Example 5 was used in place of Antimicrobial agent for fibers D obtained in Example 4.

### Example 51

A polyester woven fabric was treated and evaluated in accordance with the same procedures as those conducted in Example 49 except that a treatment bath containing 2.5% by weight of Antimicrobial agent for fibers D obtained in Example 4 and 2.5% by weight of Anionic surfactant A was used.

### Example 52

A polyester woven fabric was treated and evaluated in accordance with the same procedures as those conducted in Example 49 except that a treatment bath containing 2.5% by weight of Antimicrobial agent for fibers D obtained in Example 4, 2.5% by weight of Anionic surfactant A and 2.5% by weight of Nonionic surfactant C was used.

### Examples 53 and 54

Polyester woven fabrics were treated and evaluated in accordance with the same procedures as those conducted in Examples 51 and 52 except that Antimicrobial agent for fibers E obtained in Example 5 was used in place of Antimicrobial agent for fibers D obtained in Example 4.

### Comparative Examples 19

A polyester woven fabric was treated and evaluated in accordance with the same procedures as those conducted in Example 49 except that Antimicrobial agent for fibers a obtained in Comparative Example 1 was used in place of Antimicrobial agent for fibers D obtained in Example 4.

The results of the evaluations were as follows: the microbicidal activity to Staphylococcus aureus was 2.0 before the wash and smaller than -3.0 after 10 washes and after 50 washes; the microbicidal activity to Klebsiella pneumoniae was 1.5 before the wash and smaller than -2.9 after 10 washes and after 50 washes; and the microbicidal activity to Pseudomonase areuginosa was 1.3 before the wash, smaller than -3.0 after 10 washes and after 50 washes.

### Comparative Examples 20 to 22

Polyester woven fabrics were treated and evaluated in accordance with the same procedures as those conducted in Comparative Example 19 except that Antimicrobial agent for fibers b, c or d obtained in Comparative Examples 2 to 4 was used in place of Antimicrobial agent for fibers a obtained in Comparative Example 1.

### Comparative Example 23

The antimicrobial property and the whiteness of a polyester woven fabric without the antimicrobial treatment were evaluated.

The compositions of the treatment baths and the results of the evaluations in Examples 49 to 54 and Comparative Examples 19 to 23 are shown in Table 3.

**Table 3 - 1**

| Example | 49 | 50 | 51 | 52 | 53 | 54 |
|---|---|---|---|---|---|---|
| Composition of treatment bath (% by weight) | | | | | | |
| antimicrobial agent | D | E | D | D | E | E |
| for fibers | 2.5 | 2.5 | 2.5 | 2.5 | 2.5 | 2.5 |
| anionic surfactant A | - | - | 2.5 | 2.5 | 2.5 | 2.5 |
| anionic surfactant B | - | - | - | - | - | - |
| nonionic surfactant C | - | - | - | 2.5 | - | 2.5 |

| Staphylococcus aureus | | | | | | |
|---|---|---|---|---|---|---|
| before wash | >2.9 | >2.9 | >2.9 | >2.9 | >2.9 | >2.9 |
| 10 washes | >2.9 | >2.9 | >2.9 | >2.9 | >2.9 | >2.9 |
| 50 washes | 2.1 | 2.5 | >2.9 | >2.9 | >2.9 | >2.9 |

| Klebsiella pneumoniae | | | | | | |
|---|---|---|---|---|---|---|
| before wash | >3.0 | >3.0 | >3.0 | >3.0 | >3.0 | >3.0 |
| 10 washes | >3.0 | >3.0 | >3.0 | >3.0 | >3.0 | >3.0 |
| 50 washes | 1.5 | 1.5 | 2.0 | 2.0 | 2.3 | 2.4 |

| Pseudomonase areuginosa | | | | | | |
|---|---|---|---|---|---|---|
| before wash | >3.1 | >3.1 | >3.1 | >3.1 | >3.1 | >3.1 |
| 10 washes | 1.0 | 1.2 | 0.8 | 1.1 | 1.1 | 1.5 |
| 50 washes | -2.1 | -1.9 | 0.6 | 0.7 | 0.7 | 0.8 |

**Table 3 - 2**

| Comparative Example | 19 | 20 | 21 | 22 | 23 |
|---|---|---|---|---|---|
| Composition of treatment bath (% by weight) | | | | | |
| antimicrobial agent | a | b | c | d | - |
| for fibers | 2.5 | 2.5 | 2.5 | 2.5 | - |
| anionic surfactant A | - | - | - | - | - |
| anionic surfactant B | - | - | - | - | - |
| nonionic surfactant C | - | - | - | - | - |

| Staphylococcus aureus | | | | | |
|---|---|---|---|---|---|
| before wash | 2.0 | >2.9 | 1.8 | >2.9 | <-3.0 |
| 10 washes | <-3.0 | <-3.0 | <-3.0 | <-3.0 | <-3.0 |
| 50 washes | <-3.0 | <-3.0 | <-3.0 | <-3.0 | <-3.0 |

| Klebsiella pneumoniae | | | | | |
|---|---|---|---|---|---|
| before wash | 1.5 | >3.0 | <-2.9 | >3.0 | <-2.9 |
| 10 washes | <-2.9 | <-2.9 | <-2.9 | <-2.9 | <-2.9 |
| 50 washes | <-2.9 | <-2.9 | <-2.9 | <-2.9 | <-2.9 |
| Pseudomonase areuginosa | | | | | |

| before wash | 1.3 | 1.3 | <-3.0 | 1.5 | <-3.0 |
|---|---|---|---|---|---|
| 10 washes | <-3.0 | <-3.0 | <-3.0 | <-3.0 | <-3.0 |
| 50 washes | <-3.0 | <-3.0 | <-3.0 | <-3.0 | <-3.0 |

When the results of Examples 49 and 50 and Comparative Examples 19 to 22 in which the treatment bath contained the antimicrobial agent for fibers alone and the content of the antimicrobial agent for fibers was 2.5% by weight were compared, the antimicrobial polyester fabrics obtained in Examples showed more excellent antimicrobial properties after the washes. When the result of Examples 49 and 50 in which the antimicrobial agent for fibers alone was used are compared with the results of Examples 51 and 53 in which the anionic surfactant was used in combination and the results of Examples 52 and 54 in which the anionic surfactant and the nonionic surfactant were used in combination, it is shown that the antimicrobial effect to Pseudomonase. areuginosa after the washes was improved by the combined use.

### INDUSTRIAL APPLICABILITY

By using the antimicrobial agent for fibers of the present invention, the antimicrobial fiber product causing little decrease in the whiteness and exhibiting the excellent antimicrobial property can be obtained independently of the type of the material of the fiber product. The antimicrobial fiber product of the present invention exhibits excellent fastness of the antimicrobial property to the wash and the antimicrobial property can be maintained under the severe conditions of the wash.

## Claims

1. An antimicrobial agent for fibers which comprises a cationic polymer having a repeating unit represented by general formula [1]: 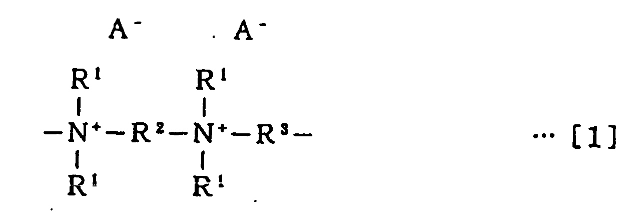 wherein a plurality of R¹ each independently represent an alkyl group having 1 to 4 carbon atoms, a hydroxyalkyl group having 1 to 4 carbon atoms or an alkenyl group having 2 to 4 carbon atoms, R² represents an alkylene group having 3 to 10 carbon atoms, R³ represents a heteroalkylene group having 2 to 6 carbon atoms and A⁻ represents an anion.

2. An antimicrobial agent for fibers according to Claim 1, wherein the cationic polymer has a weight-average molecular weight of 6,000 to 80,000.

3. An antimicrobial agent for fibers according to Claim 1, which comprises the cationic polymer and an anionic surfactant.

4. An antimicrobial agent for fibers according to Claim 3, which comprises the cationic polymer, the anionic surfactant and a nonionic surfactant.

5. An antimicrobial fiber product which is treated with an antimicrobial agent described in any one of Claims 1 to 4.

## Patentansprüche

1. Antimikrobielles Mittel für Fasern, welches ein kationisches Polymer mit einer durch die allgemeine Formel [1]: 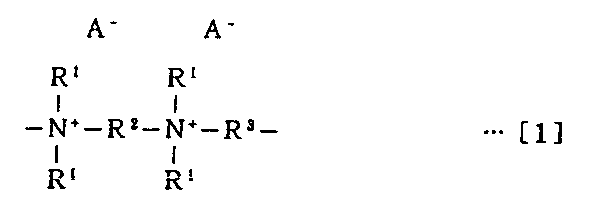 dargestellte Wiederholungseinheit umfasst, wobei eine Vielzahl von R¹ jeweils unabhängig eine Alkylgruppe mit 1 bis 4 Kohlenstoffatomen, eine Hydroxyalkylgruppe mit 1 bis 4 Kohlenstoffatomen oder eine Alkenylgruppe mit 2 bis 4 Kohlenstoffatomen darstellt, R² eine Alkylengruppe mit 3 bis 10 Kohlenstoffatomen darstellt, R³ eine Heteroalkylengruppe mit 2 bis 6 Kohlenstoffatomen darstellt und A⁻ ein Anion darstellt.

2. Antimikrobielles Mittel für Fasern nach Anspruch 1, wobei das kationische Polymer ein Gewichtsmittel des Molekulargewichts von 6000 bis 80000 aufweist.

3. Antimikrobielles Mittel für Fasern nach Anspruch 1, welches das kationische Polymer und ein anionisches Tensid umfasst.

4. Antimikrobielles Mittel für Fasern nach Anspruch 3, welches das kationische Polymer, das anionische Tensid und ein nicht-ionisches Tensid umfasst.

5. Antimikrobielles Faserprodukt, welches mit einem antimikrobiellen Mittel nach einem der Ansprüche 1 bis 4 behandelt ist.

## Revendications

1. Agent anti-microbien pour fibres qui comprend un polymère cationique contenant un motif répété représenté par la formule générale [I] 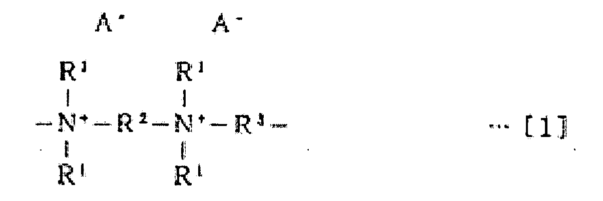 dans laquelle une pluralité de radicaux R¹ représentent chacun indépendamment un groupe alkyle contenant de 1 à 4 atomes de carbone, un groupe hydroxyalkyle contenant de 1 à 4 atomes de carbone ou un groupe alcényle contenant de 2 à 4 atomes de carbones, R² représente un groupe alkylène contenant 3 à 10 atomes de carbone, R³ représente un groupe hétéroalkylène contenant 2 à 6 atomes de carbone et A⁻ représente un anion.

2. Agent anti-microbien pour fibres selon la revendication 1, dans lequel le polymère cationique a une masse moléculaire moyenne en masse de 6 000 à 80 000.

3. Agent anti-microbien pour fibres selon la revendication 1, qui comprend le polymère cationique et un tensioactif anionique.

4. Agent anti-microbien pour fibres selon la revendication 3, qui comprend le polymère cationique, le tensioactif anionique et un tensioactif non ionique.

5. Produit fibreux anti-microbien qui est traité par un agent anti-microbien décrit dans l'une quelconque des revendications 1 à 4.
